# EUROPEAN PATENT SPECIFICATION

(11) **EP 2 423 143 B1**
(45) Date of publication and mention of the grant of the patent: **01.10.2014**
(21) Application number: 11176553.3
(22) Date of filing: 04.08.2011
(51) Int. Cl.: F16C 29/04, B65H 54/38, B65H 54/72, B65H 67/048, F16C 33/30

(54) **Use of a yarn winding device**
Verwendung einer Garnwicklungsvorrichtung
Utilisation d'un dispositif de renvideur de fil

(30) Priority: 24.08.2010 JP 2010187165
(43) Date of publication of application: 29.02.2012
(73) Proprietor: TMT Machinery, Inc., Osaka-shi, Osaka 541-0041 (JP)
(72) Inventor: Hashimoto, Kinzo, Kyoto, 612-8686 (JP); Kohno, Satoru, Kyoto, 612-8686 (JP)
(74) Representative: HOFFMANN EITLE

(56) References cited:
- EP-A2- 1 536 152
- EP-A2- 1 826 425
- JP-A- 11 108 056
- JP-A- 2008 290 821
- US-A- 5 427 454

## Description

### BACKGROUND OF THE INVENTION

The present invention relates to a yarn winding device winding yarns onto bobbins.

A yarn winding device recited in Japanese Unexamined Patent Publication No. 2008-290821 is arranged such that, an elevation frame (supporting frame) having a traverse unit is elevatably supported by a main body frame supporting a bobbin holder, and the elevation frame is connected via a guide unit to a supporting plate (roller supporter) which supports a contact roller contacting either the outer circumferences of bobbins attached to the bobbin holder or the outer circumferences of packages produced by winding yarns onto the bobbins, thereby allowing the supporting plate to be elevatable with respect to the elevation frame.

The guide unit is a so-called cross-roller-type guide unit and has a first guide member fixed to the elevation frame, a second guide member fixed to the supporting plate, and rollers provided between the first guide member and the second guide member. The first and second guide members have first and second V-shaped grooves, respectively, and the first guide member and the second guide member are arranged so that the first V-shaped groove opposes the second V-shaped groove. The rollers are housed in the space formed by the first V-shaped groove and the second V-shaped groove. The rollers are constituted by two types of rollers having the axes orthogonal to each other, respectively, and these two types of rollers are alternately disposed along the length of the guide members. Furthermore, these rollers are connected with one another by a roller supporter (roller supporting component) which is provided between the first guide member and the second guide member.

Since the elevation frame and the supporting frame are connected to each other via the cross-roller-type guide unit, the contact roller and the supporting plate are pushed up on account of the increase in the diameter of each package in accordance with the increase in the amount of wound yarns, and therefore the contact roller and the supporting plate smoothly move upward, with the result that the contact pressures from the contact roller to the respective packages are unlikely to be inconsistent.

In a yarn winding device (elastic yarn winder) recited in Japanese Unexamined Patent Publication No. 2005-225611, a sliding box (supporting frame) having a contact roller and a traverse unit are elevatably supported by a frame supporting a bobbin holder. The contact roller is arranged to be elevatable with respect to the sliding box. During the winding of yarns, an operation to temporarily elevate the sliding box and then returns the box to the original height (so-called creeping) is repeated each time a predetermined period elapses, for example. This prevents, as described later, each package from being thicker at the respective ends in the axial direction than the remaining part of the package, i.e. prevents the problem of so-called saddle bag at ends.

A sliding apparatus which may depress a micro slip phenomenon without fail and realize the system with a simple structure is disclosed in EP 1 536 152 A2. In the sliding apparatus, a sliding member is slid relative to a shaft, a loading path is provided between the shaft and the sliding member, a plurality of rolling members are arranged in the loading path and the rolling members are adapted to roll and move along the loading path, a convex portion and/or a concave portion are provided to at least one rolling member out of the rolling members arranged in the loading path, a convex portion and/or a concave portion engaged with the convex portion and/or the concave portion of the rolling member are provided to the loading path, the rolling member is arranged in the loading path in concave and convex engagement with the loading path and a rolling member retainer for retaining the rolling members is provided in the loading path.

### SUMMARY OF THE INVENTION

In regard to the problem above, in the same manner as the disclosure of Publication No. 2005-225611, the yarn winding device recited in Japanese Unexamined Patent Publication No. 2008-290821 is also able to prevent the problem of the saddle bag at ends of each package by moving the elevation frame upward or downward while the yarns are wound, because the supporting plate supporting the contact roller is arranged to be elevatable with respect to the elevation frame and the elevation frame is provided with the traverse unit.

However, in the case above, the elevation frame is moved up and down many times (e.g. about several tens of times to several hundreds of times) while a single package is formed, and at the same time the first guide member and the second guide member repeatedly move relative to each other. For this reason, gradually the rollers and the roller supporter provided between the first guide member and the second guide member are slid and positionally deviate with respect to the first and second guide members.

When the positional deviation of the rollers and the roller supporter becomes serious, the rollers and the roller supporter may drop out from one of the guide members, while the first guide member is being moved up or down. When a stopper is formed at an edge of each guide member to prevent the rollers and the roller supporter from dropping out, the relative movement of the first guide member and the second guide member may not be smoothly carried out because one of the rollers and the roller supporter contacts the stopper.

Furthermore, even if the elevation frame is not moved up or down while the yarns are wound onto the bobbins, the first guide member and the second guide member move relative to each other when the contact roller and the supporting plate are pushed up by the packages. The positional deviation of the rollers and the roller supporter with respect to the first and second guide members also occurs in this case.

It is, however, noted that, since the frequency of the relative movement of the first guide member and the second guide member is not large while a single package is formed, the positional deviation of the rollers and the roller supporter does not become serious while a single package is formed. Furthermore, when the guide member is provided with a stopper for stopping the rollers and the roller supporter, the rollers and the roller supporter are returned to their original positions by moving the first guide member and the second guide member relative to each other while keeping the roller supporter contacting the stopper, in the following manner, for example: Each time the formation of a predetermined number of packages is completed, each of the first guide member and the second guide member is caused to move round its range of movement. This makes it possible to prevent the positional deviation of the rollers and the roller supporter from becoming serious even if a plurality of packages are serially formed.

The operation above, however, is disadvantageous in that, since the roller supporter collides the stopper, components such as the rollers and the roller supporter receive a severe impact, and this may shorten the life of the components such as the rollers and the roller supporter.

An object of the present invention is to provide a yarn winding device in which a positional deviation of rollers provided between a first guide member fixed to a supporting frame and a second guide member fixed to a roller supporter is prevented in a guide unit which guides the supporting frame supported by a main body frame and the roller supporter supporting a contact roller to move in a direction approaching or moving away from the bobbin holder.

According to the first aspect of the invention, as defined in claim 1, a use of a yarn winding device is claimed, the yarn winding device including: a bobbin holder which is supported by a main body frame and to which bobbins are attached; a supporting frame which is supported by the main body frame to be movable in directions approaching and away from the bobbin holder; a contact roller which is arranged to be in parallel to the bobbin holder and rotates while contacting either the outer circumferences of the bobbins or the outer circumferences of packages formed by winding yarns onto the bobbins; a roller supporter which is provided on the supporting frame to be movable in the directions approaching and away from the bobbin holder and rotatably supports the contact roller; and a guide unit which guides the supporting frame and the roller supporter in the directions approaching and away from the bobbin holder, the guide unit including: a first guide member fixed to the supporting frame; a second guide member fixed to the roller supporter to oppose the first guide member; rollers provided between the first guide member and the second guide member; and an anti-slip means which allows the rollers to roll in the directions approaching and away from the bobbin holder with respect to the first guide member and the second guide member and prevents the rollers from slipping in the directions approaching and away from the bobbin holder with respect to the first guide member and the second guide member.

According to the present invention, when the first guide member and the second guide member move relative to each other on account of the movement of the supporting frame or the roller supporter, the rollers provided therebetween are, by the anti-slip means, allowed to roll in the directions approaching and away from the bobbin holder with respect to first and second guide members but do not slip in the directions approaching and away from the bobbin holder with respect to first and second guide members. As such, it is possible to prevent the rollers from positionally deviating with respect to the first and second guide members.

According to the second aspect of the invention, the yarn winding device further includes a roller supporting component which maintains positional relations of the rollers by connecting the rollers with one another.

According to the present invention, since the positional relations of the rollers are maintained by connecting the rollers by the roller supporting component, it is possible to prevent all of the rollers from slipping in the directions approaching and away from the bobbin holder only by providing the anti-slip means in at least one of the rollers or in the roller supporting component.

According to the third aspect of the invention, the yarn winding device of the second aspect is arranged so that the anti-slip means includes: concave portions which are formed, along the directions approaching and away from the bobbin holder, on surfaces of the first guide member and the second guide member at which surfaces the first and second guide members contact the rollers; and protruding portions which correspond to the respective concave portions, are formed on the outer circumference of at least one of the rollers along the circumferential direction, and are able to fit in the corresponding concave portions.

According to the present invention, the anti-slip means is constituted by the concave portions formed on the first and second guide members and the protruding portions formed on the outer circumference of at least one roller.

According to the fourth aspect of the invention, the yarn winding device of the second aspect is arranged so that the anti-slip means includes: rack gears provided in the first guide member and the second guide member, respectively; and a pinion gear which is provided in the roller supporting component and engages with the rack gears.

According to the present invention, the rack gears of the first and second guide members and the pinion gear of the roller supporting component constitute the anti-slip means.

According to the fifth aspect of the invention, the yarn winding device of any one of the first to fourth aspects is arranged so that the supporting frame is provided with a traverse unit which traverses the yarns in the axial directions of the bobbins, and the distance between the traverse unit and the bobbin holder is changeable by moving the supporting frame having the traverse unit in one of the directions approaching and away from the bobbin holder.

As the distance between the traverse unit and the bobbin holder is changed by moving the supporting frame having the traverse unit while the yarns are being wound, the winding width of the yarn on the bobbin is changed. As such, the problem of saddle bag at ends of the package is prevented by repeatedly moving the supporting frame having the traverse unit. However, this causes the first guide member and the second guide member to repeatedly move relative to each other, and hence the rollers are likely to be significantly deviated, if no anti-slip means is provided.

In this regard, since the present invention is provided with the anti-slip means, it is possible to prevent the rollers from slipping in the directions approaching and away from the bobbin holder with respect to the first guide member and the second guide member, even if the first guide member and the second guide member move relative to each other many times.

According to the sixth aspect of the invention, the yarn winding device of any one of the first to fifth aspects is arranged so that the first guide member has a first V-shaped groove which is substantially V-shaped in cross section and extends in the directions approaching and away from the bobbin holder, the second guide member has a second V-shaped groove which is substantially V-shaped in cross section and extends in the directions approaching and away from the bobbin holder, and the rollers are arranged so that each of the rollers contacts both of the first V-shaped groove and the second V-shaped groove at positions on the outer circumference which positions are symmetrical about the rotation axis of the rollers and axes of neighboring ones of the rollers are orthogonal to each other.

According to the present invention, since the guide unit is a so-called cross-roller-type guide unit, it is possible to smoothly move the supporting frame fixed to the first guide member and the roller supporter fixed to the second guide member relative to each other.

According to the present invention, when the first guide member and the second guide member move relative to each other on account of the movement of the supporting frame or the roller supporter, the rollers provided therebetween are, by the anti-slip means, allowed to roll in the directions approaching and away from the bobbin holder with respect to first and second guide members but do not slip in the directions approaching and away from the bobbin holder with respect to first and second guide members. As such, it is possible to prevent the rollers from positionally deviating with respect to the first and second guide members.

According to the seventh aspect of the invention, the up and down movement of the supporting frame is repeated for about several tens to several hundreds of times while a single package is formed.

### BRIEF DESCRIPTION OF THE DRAWINGS

Fig. 1 is a front elevation of a yarn winding device according to an embodiment of the present invention.
Fig. 2 is a profile of the yarn winding device.
Fig. 3 is an enlarged view of two guide units which are provided at one end portion of the supporting plate to be adjacent to each other.
Fig. 4 is an oblique perspective view of a single guide unit.
Fig. 5A is a horizontal cross section of the guide unit and shows a roller whose axis is tilted with respect to the direction in which the guide members oppose each other.
Fig. 5B is a horizontal cross section of the guide unit and shows a roller whose axis is tilted in the direction opposite to the roller in Fig. 5A, with respect to the direction in which the guide members oppose each other.
Fig. 5C is a horizontal cross section of the guide unit and shows a roller having a protruding portion.
Fig. 6A is a front enlarged view of the bobbin holder, the contact roller, and the traverse unit, showing the relation between the position and traversal width of the traverse unit and the winding width of yarns.
Fig. 6B is another enlarged view.
Fig. 7 is an oblique perspective view of a modification 1, which is equivalent to Fig. 4.

### DESCRIPTION OF THE PREFERRED EMBODIMENTS

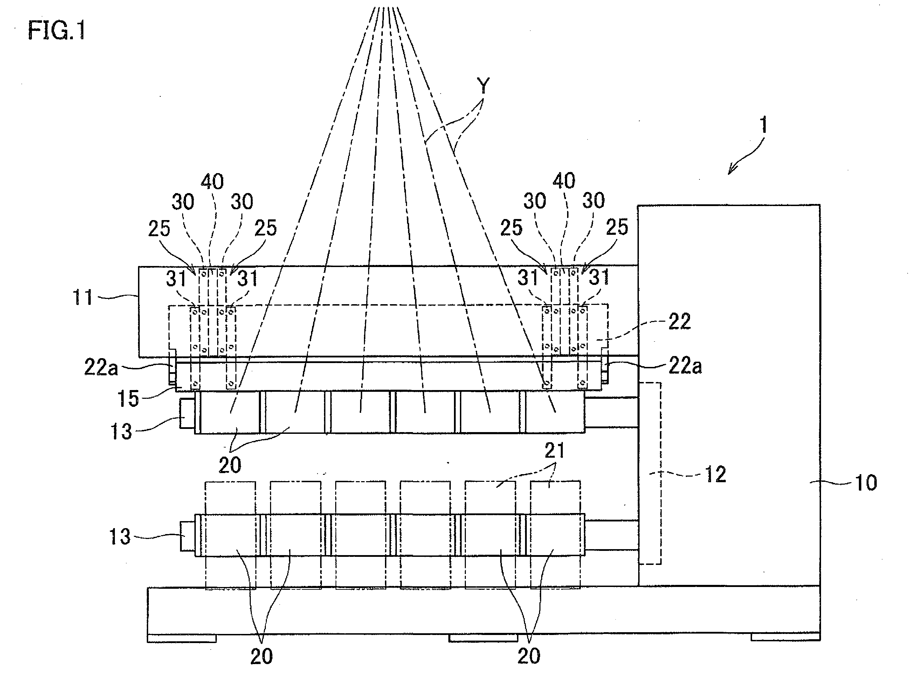

The following will describe an embodiment of the present invention. As shown in Fig. 1, a yarn winding device 1 serially receives a plurality of (6 in the present embodiment) yarns Y from an unillustrated spinning machine. This yarn winding device 1 is structured to form a plurality of packages 21 by winding the yarns Y supplied from the spinning machine onto a plurality of bobbins 20.

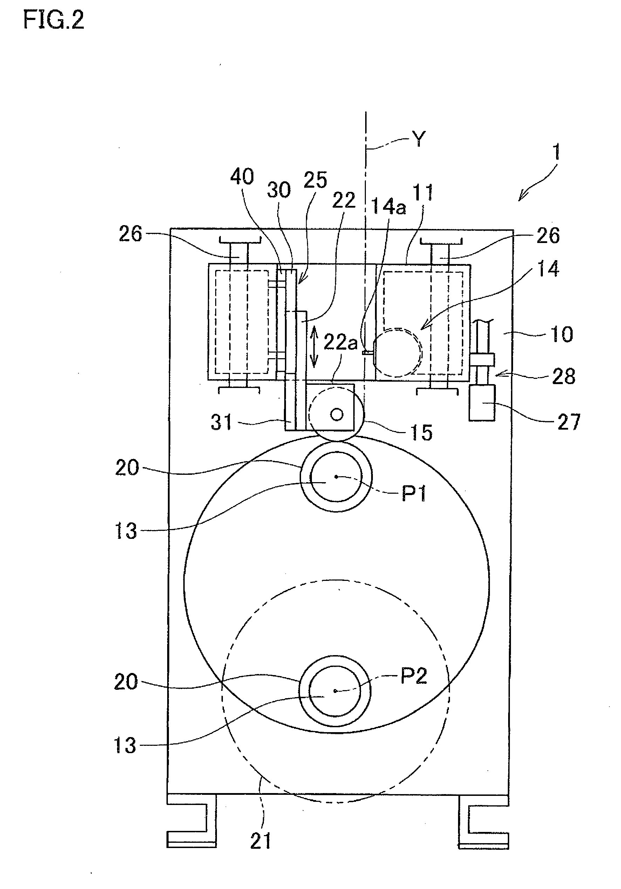

As shown in Fig. 1 and Fig. 2, the yarn winding device 1 includes components such as a main body frame 10, an elevation frame 11 attached to the main body frame 10 to be vertically movable (elevatable), a disc-shaped turret 12 attached to the main body frame 10 to be rotatable, two bobbin holders 13 supported by the main body frame 10 via the turret 12 and to each of which a plurality of bobbin 20 are attached, a traverse unit 14 which traverses yarns Y which are to be wound onto the bobbins 20, and a contact roller 15 which contacts the bobbins 20 attached to the bobbin holder 13 at the winding position P1 (see Fig. 2).

The disc-shaped turret 12 is attached to the main body frame 10 to be rotatable and to be in parallel to the vertical surface of the main body frame 10. At two positions which are symmetrical about the rotation center of the turret 12, the two bobbin holders 13 are provided to extend in the horizontal direction orthogonal to the turret 12 and to be rotatable. Furthermore, these two bobbin holders 13 are arranged to rotate together with the turret 12. As shown in Fig. 1, to each of the two bobbin holders 13, a plurality of (6 in the present embodiment) bobbins 20 are attached to form a single line along the axial direction of the bobbin holder 13.

The turret 12 is rotated by an unillustrated motor. As the turret 12 rotates, each of the two bobbin holders 13 moves between a winding position P1 where the bobbin holder contacts the contact roller 15 and the yarns Y are wound onto the bobbins 20 and a standby position P2 which is symmetrical with the winding position P1 about the rotation axis of the turret 12. As the winding to the yarns Y onto the bobbins 20 attached to the bobbin holder 13 at the winding position P1 is completed, The bobbin holder 13 at the winding position P1 is replaced with the bobbin holder 13 at the standby position P2.

The two bobbin holders 13 supported by the turret 12 are rotated by an unillustrated motor, respectively. As the bobbin holder 13 at the winding position P1 rotates, the yarns Y are wound onto the bobbins 20 attached to this bobbin holder 13.

The elevation frame 11 (supporting frame) is a frame which is long along the axial direction of the bobbin holders 13. This elevation frame 11 is supported by the main body frame 10 at the base end portion in the longitudinal direction to be movable (elevatable) in vertical directions (directions approaching and away from the bobbin holder) while being kept to be in parallel to the bobbin holders 13. More specifically, as shown in Fig. 2, the longitudinal base end portion of the elevation frame 11 is supported by two guide shafts 26 which are fixed to the main body frame 10 to be vertically movable. Furthermore, the elevation frame 11 is moved in vertical directions by an elevation mechanism 28 including an elevation drive motor 27. The yarn winding device 1 arranged as described above is particularly suitable for winding yarns Y while applying a relatively low contact pressure onto the packages 21.

As shown in Fig. 2, the elevation frame 11 is provided with a plurality of traverse units 14 corresponding to the respective bobbins 20 attached to the bobbin holder 13 at the winding position P1, and each traverse unit 14 is provided with a traverse guide 14a. While the yarns Y are placed on the respective traverse guides 14a, each traverse unit 14 causes the traverse guide 14a to reciprocate within a predetermined traversal range along the axial direction of the bobbin holder 13 (i.e. the direction orthogonal to the surface of Fig. 2). As such, the yarns Y are wound onto the corresponding bobbins 20 while being traversed.

The elevation frame 11 is connected to a supporting plate 22 (roller supporter) which supports the contact roller 15. More specifically, this supporting plate 22 is long in the longitudinal direction of the elevation frame 11, and is connected to the elevation frame 11 to be vertically movable via guide units 25 which are provided at the respective end portions of the supporting plate 22 in the longitudinal direction. Furthermore, at the respective end portions of the supporting plate 22 in the longitudinal direction, two pivot portions 22a are provided, respectively.

As shown in Fig. 1, the contact roller 15 is a tube which is substantially as long as the bobbin holder 13, and is rotatably supported by the above-described two pivot portions 22a of the supporting plate 22 to be in parallel to the bobbin holders 13. The contact roller 15 is arranged to be able to contact the outer circumferences of either all bobbins 20 attached to the bobbin holder 13 at the winding position P1 or all packages 21 formed by winding the yarns Y onto the bobbins 20. When the yarns Y are wound onto the bobbins 20, the contact roller 15 rotates while applying a predetermined contact pressure to each package 21, so as to adjust the shape of each package 21. Furthermore, the supporting plate 22 and the contact roller 15 are guided by the guide units 25 so as to change their relative positions with respect to the elevation frame 11, in the direction approaching the bobbins 20 at the winding position P1 (i.e. downward) and in the direction away from these bobbins 20 (i.e. upward).

Now, the guide unit 25 will be detailed below. In the present embodiment, as shown in Fig. 1, the guide units 25 are provided at the longitudinal end portions of the supporting plate 22, respectively. Furthermore, at each of the end portions of the supporting plate 22, two guide units 25 are provided to be adjacent to the end portion. In other words, the supporting plate 22 is connected to the elevation frame 11 via four guide units 25, i.e. two guide units at each end portion.

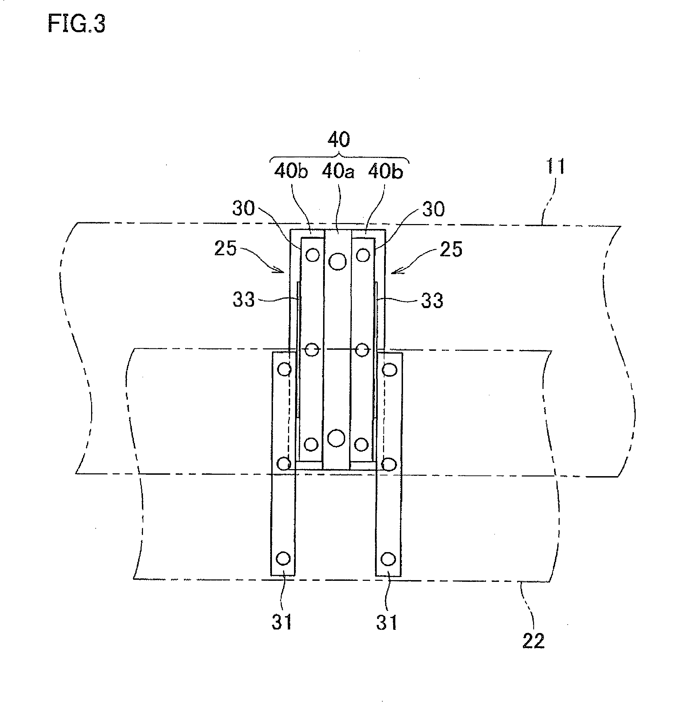

Each guide unit 25 is a so-called cross-roller-type guide unit. As shown in Fig. 3 to Fig. 5C, each guide unit 25 includes a first guide member 30 which vertically extends and is fixed to the elevation frame 11, a second guide member 31 which also vertically extends and is fixed to the supporting plate 22, and a plurality of rollers 32a and 32b which are rotatably arranged between the first guide member 30 and the second guide member 31 to be aligned in the longitudinal direction of these members 30 and 31 (i.e. in the vertical direction).

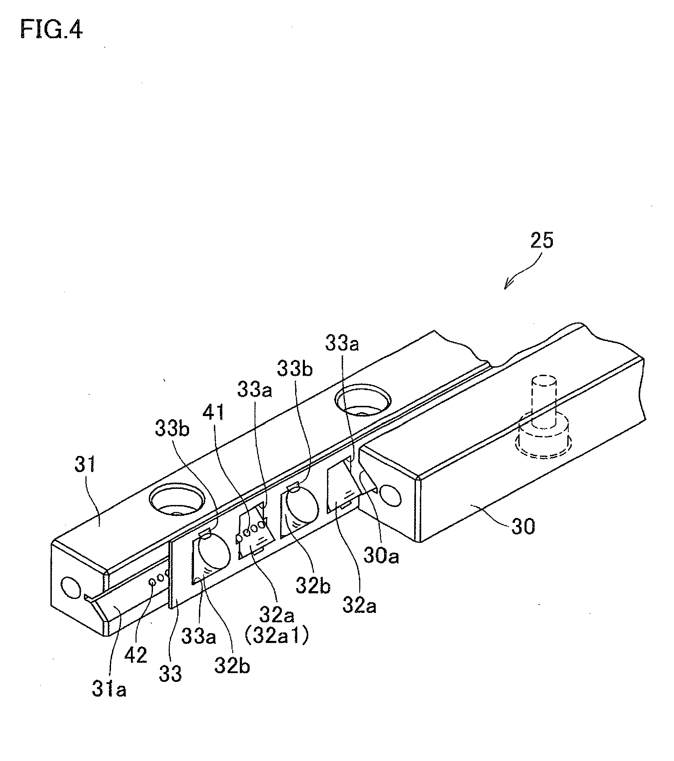

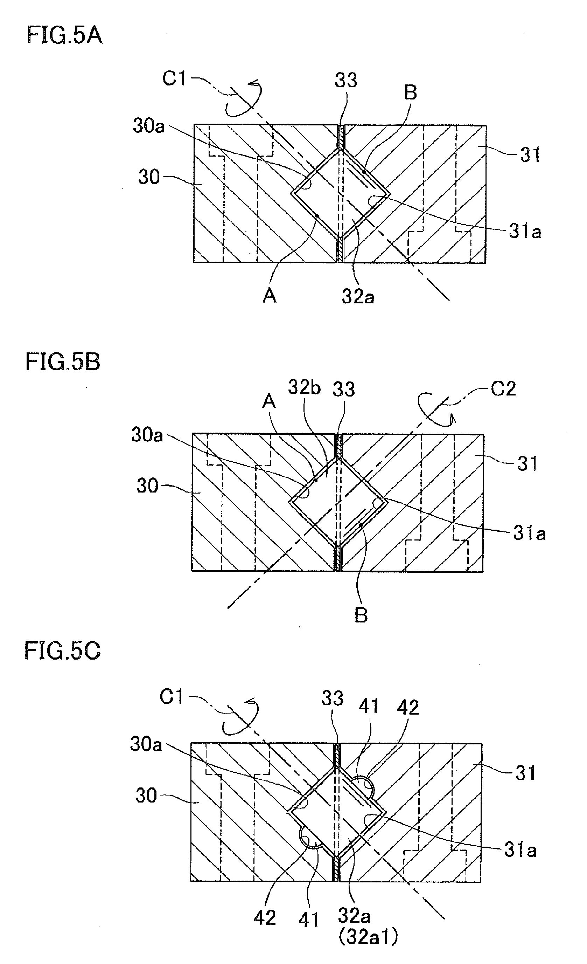

As shown in Fig. 3, to the elevation frame 11, a fastener 40 having a vertically-extending protruding portion 40a and two attaching portions 40b on the respective sides of the protruding portion 40a is fixed at the protruding portion 40a by using a bolt. To the two attaching portions 40b of this fastener 40, the first guide members 30 of the two guide units 25 are fixed by bolts, respectively. As shown in Fig. 4 and Fig. 5A to Fig. 5C, on the one side face of the first guide member 30 (i.e. the face opposite to the protruding portion 40a in Fig. 3), a first V-shaped groove 30a which is V-shaped in cross section is formed in vertical directions along the entire length of the guide member 30.

As shown in Fig. 3, to the back surface of the supporting plate 22 (i.e. the surface opposite to the contact roller 15), second guide members 31 of the two guide units 25 are fixed by bolts. These two second guide members 31 are arranged to sandwich the two first guide members 30 fixed to the elevation frame 11. As shown in Fig. 4, on one side face of the second guide member 31 (i.e. on the surface opposing the first guide member 30), a second V-shaped groove 31a which is V-shaped in cross section is formed to vertically extend along the entire length of the second guide member 31. In other words, in each of the right and left guide units 25 shown in Fig. 3, the first V-shaped groove 30a of the first guide member 30 and the second V-shaped groove 31a of the second guide member 31 oppose each other.

As show in Fig. 4 and Fig. 5A to Fig. 5C, the space formed by the first V-shaped groove 30a and the second V-shaped groove 31a opposing each other houses a plurality of column-shaped rollers 32a and 32b to be rotatable. The roller 32a is, as shown in Fig. 5A, arranged so that its rotation axis C1 is tilted leftward for 45 degrees with respect to the direction in which the guide members 30 and 31 oppose each other (i.e. the crosswise direction in Fig. 5A), whereas the roller 32b is, as shown in Fig. 5B, arranged so that its rotation axis C2 is tilted rightward for 45 degrees with respect to that opposing direction. In short, the axes of the respective rollers 32a and 32b are orthogonal to each other. These two types of rollers 32a and 32b are alternately provided along the longitudinal direction of the guide members 30 and 31.

The first guide member 30 and the second guide member 31 are fixed to the elevation frame 11 and the supporting plate 22, respectively, while a predetermined nipping load (pre-load) is being applied to the guide members. For this reason, as shown in Fig. 5A to Fig. 5C, the rollers 32a and 32b provided between the guide members 30 and 31 contact both of the first V-shaped groove 30a and the second V-shaped groove 31a, at the two positions (A and B) on the outer circumferences thereof, which positions are symmetrical with each other about the rotation axis C1 or C2.

With this arrangement, when the first guide member 30 and the second guide member 31 move relative to each other, the rollers 32a and 32b smoothly rotate about the rotation axes C1 and C2. For this reason, the moving resistance between the supporting plate 22 (contact roller 15) and the elevation frame 11 is only the rolling resistances of the rollers 32a and 32b, and hence the moving resistance is extremely small.

In addition to the above, in the guide unit 25, the rollers 32b restrain the guide members 30 and 31 from deviating from each other along the rotation axis C1 of the rollers 32a and the rollers 32a restrain the guide members 30 and 31 from deviating from each other along the rotation axis C2 of the rollers 32b. For this reason, it is possible to restrain the supporting plate 22 and the elevation frame 11 from rattling in the horizontal direction orthogonal to the moving direction (i.e. in the direction in parallel to the surfaces of Fig. 5A to Fig. 5C).

Because of the above, the frame 11 and the supporting plate 22, which are connected with each other via the guide unit 25, smoothly move relative to each other.

In addition to the above, on the outer circumference of the roller 32a1 which is one of the rollers 32a, a plurality of protruding portions 41 each being substantially hemispherical are formed along the circumferential direction. Correspondingly, on the surfaces of the first V-shaped groove 30a and the second V-shaped groove 31a at which surfaces the grooves contact the rollers 32a, a plurality of concave portions 42 are formed along the longitudinal direction of the guide members 30 and 31 to fit in the corresponding protruding portions 41. In the present embodiment, the protruding portions 41 formed on the roller 32a1 and the concave portions 42 formed on the first V-shaped groove 30a and the second V-shaped groove 31a constitute the anti-slip means of the present invention.

Between the first guide member 30 and the second guide member 31 is provided a roller supporter 33. This roller supporter 33 has a plurality of through holes 33a and a plurality of holding hooks 33b corresponding to the respective through holes 33a. The rollers 32a and 32b inserted into the through holes 33a of the roller supporter 33 are arranged not to drop out by being stopped by the holding hooks 33b. The rollers 32a and 32b are connected with one another as above and the positional relations therebetween are maintained.

In the present embodiment, the roller 32a1 is provided with the protruding portions 41 and the V-shaped grooves 30a and 31a are provided with the concave portions 42. Because of this arrangement, as the first guide member 30 and the second guide member 31 move relative to each other, the rollers 32a and 32b roll and one of the protruding portions 41 fits in the corresponding concave portion 42, in accordance with the relative positions of the first guide member 30 and the second guide member 31. As the protruding portion 41 fits in the concave portion 42, the roller 32a1 does not slip with respect to the guide members 30 and 31 in the longitudinal direction of the guide members 30 and 31. Because the slipping of the roller 32a1 is prevented, the roller supporter 33 to which the roller 32a1 is attached does not slip and the other rollers 32a and 32b connected to the roller 32a1 via the roller supporter 33 do not slip.

In other words, the protruding portions 41 and the concave portions 42 constituting the anti-slip means of the present invention allow the rollers 32a and 32b to roll with respect to the guide members 30 and 31 and at the same time prevent the rollers 32a and 32b and the roller supporter 33 from slipping with respect to the guide members 30 and 31.

In the present embodiment, since the rollers 32a and 32b are connected with each other by the roller supporter 33, as described above, the slipping of all rollers 32a and 32b is prevented only by forming protruding portions 41 on a single roller 32a1. It is therefore unnecessary to form protruding portions 41 on all of the rollers 32a and 32b.

Now, how packages 21 are formed by winding yarns Y onto bobbins 20 in the yarn winding device 1 will be detailed. As described above, in the yarn winding device 1, a plurality of yarns Y are wound onto a plurality of bobbins 20 attached to the bobbin holder 13 at the winding position P1, while being traversed by the traverse unit 14.

As the diameters of the packages 21 increase on account of the increase in the amounts of yarns Y wound onto the bobbins 20, the contact roller 15 and the supporting plate 22 are pushed up by the packages 21. In this regard, since the elevation frame 11 is connected to the supporting plate 22 via the guide unit 25, the contact roller 15 and the supporting plate 22 smoothly move as described above. On account of the above, the contact pressures from the contact roller 15 to the respective packages 21 are unlikely to be inconsistent.

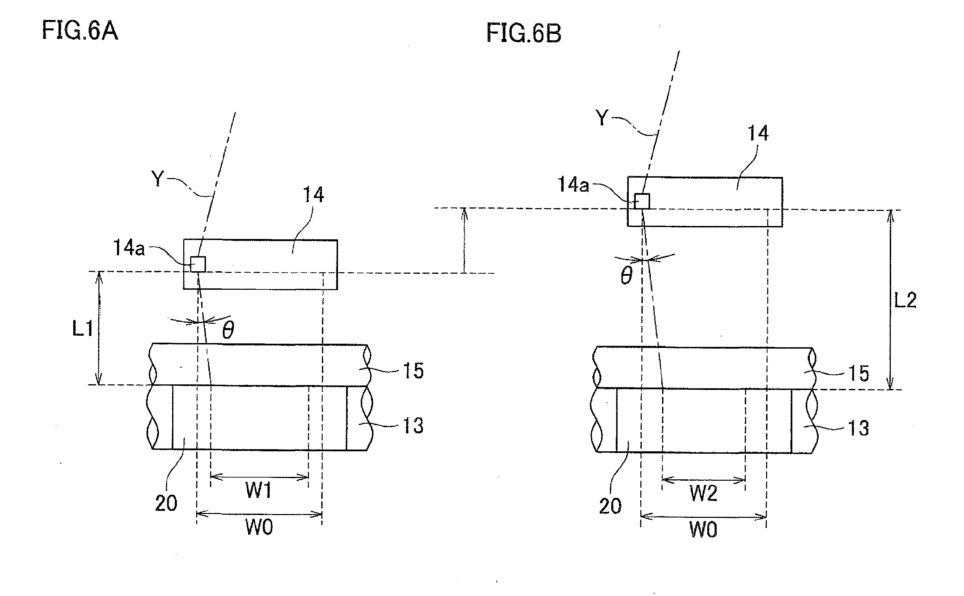

When as in the present embodiment the yarns Y are wound onto the bobbins 20 while being traversed by the traverse unit 14, as shown in Fig. 6A, a part of the yarn Y which part is placed on the traverse guide 14a is positionally deviated from a part of the yarn Y which part is wound onto the bobbin 20, in the axial direction of the bobbin 20 (in short, traverse delay occurs). In this case, a part of the yarn Y which part is between the traverse guide 14a and the bobbin holder 13 is tilted at a predetermined winding angle θ toward the center of the bobbin 20 in the axial direction, with respect to the radial direction of the bobbin 20. The winding angle θ is determined based on the traverse speed and the rotation speed of the bobbin 20. For this reason, a part of the yarn Y which has already been wound onto the bobbin 20 is temporarily put on hold when the traversal by the traverse unit 14 is reversed. Provided that the winding width of the yarn Y on the bobbin 20 is constant, the yarn Y is thicker at the end portions of the package 21 in the axial direction than the remaining portions, and hence the problem of so-called saddle bag at ends occurs at the both end portions of the package 21 in the axial direction.

To solve this problem, the yarn winding device 1 is arranged so that, in normal winding, as shown in Fig. 6A, the yarn Y is wound while keeping the length (free length) of the part of the yarn Y between the traverse guide 14a and the bobbin holder 13 to be L1 in the vertical direction, and the elevation frame 11 (traverse unit 14) is temporarily moved up so that the free length becomes L2 (>L1) and then moved down to the original position at regular intervals (e.g. once in about one minutes) as shown in Fig. 6B. This operation is called creeping.

In regard to the above, since the winding angle θ is determined as described above by the traverse speed and the rotation speed of the bobbin and is not influenced by the free length, the positional deviation between the part of the yarn Y placed on the traverse guide 14a and the part of the yarn Y wound on the bobbin 20 increases in the axial direction of the bobbin 20, as the free length increases.

For the reason above, in the normal winding, i.e., when the free length is L1, as shown in Fig. 6A, the yarn Y is wound onto the bobbin 20 with the winding width W1 which is shorter than the traversal width W0 of the traverse unit 14. On the other hand, when the traverse unit 14 has been moved up, i.e., when the free length is L2, as shown in Fig. 6B, the yarn Y is wound onto the bobbin 20 with the winding width W2 which is shorter than the winding width W1.

As such, it is possible in yarn winding device 1 to shorten the winding width of the yarn Y on the bobbin 20 by moving up the traverse unit 14. As the winding width of the yarn Y on the bobbin 20 is shortened, the thickness of the yarn Y at the both end portions of the package 21 in the axial direction is reduced, and hence the problem of saddle bag at ends in the package 21 is resolved.

In this regard, to prevent the occurrence of the problem of saddle bag at ends in the package 21 by moving up and down the traverse unit 14, the up-down of the elevation frame 11 is repeated (e.g. about several tens to several hundreds of times) while a single package 21 is formed.

As the up-down of the elevation frame 11 is repeated in this way, the first guide member 30 and the second guide member 31 repeatedly move relative to each other. For this reason, when the protruding portions 41 and the concave portions 42 are not provided, the rollers 32a and 32b and the roller supporter 33 provided between the first guide member 30 and the second guide member 31 vertically slip with respect to the guide members 30 and 31, and gradually deviate from the original positions.

As the positional deviation of the rollers 32a and 32b and the roller supporter 33 becomes significant, the rollers 32a and 32b and the roller supporter 33 may drop off from one of the guide members 30 and 31 while the first guide member 30 is being moved up or down. Furthermore, even if unillustrated stoppers are provided at the ends of the guide members 30 and 31 to prevent the rollers 32a and 32b and the roller supporter 33 from dropping off, the first guide member 30 and the second guide member 31 may not smoothly move relative to each other because one of the rollers 32a and 32b and the roller supporter 33 contacts the stopper.

In regard to the above, the above-described problem does not occur in the embodiment because, as described above, the slipping of the rollers 32a and 32b and the roller supporter 33 is prevented in such a way that the protruding portions 41 formed on the outer circumference of the roller 32a1 fit in the concave portions 42 formed on the first V-shaped groove 30a and the second V-shaped groove 31a.

While the present invention has been described in conjunction with the specific embodiment outlined above, it is evident that many alternatives, modifications and variations will be apparent to those skilled in the art. Various changes may be made without departing from the spirit and scope of the invention.

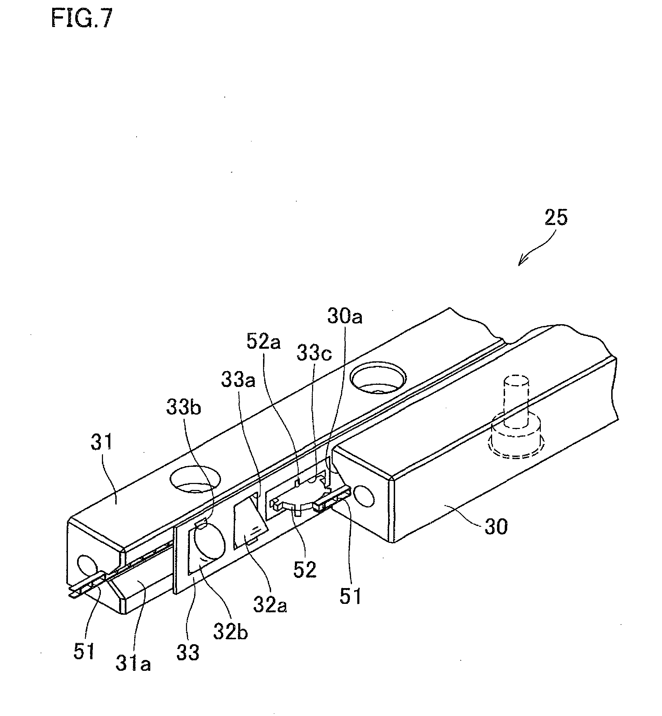

According to a modification (modification 1), as shown in Fig. 7, in place of the protruding portions 41 and the concave portions 92, the first guide member 30 and the second guide member 31 are provided with rack gears 51, respectively, whereas the roller supporter 33 is provided with a pinion gear 52 corresponding to the rack gears 51. In the modification 1, the two rack gears 51 and the pinion gear 52 constitute the anti-slip means of the present invention.

The rack gears 51 are provided at the respective bottoms of the first V-shaped groove 30a and the second V-shaped groove 31a, and extend along the longitudinal direction of the guide members 30 and 31. The pinion gear 52 is provided in a through hole 33c of the roller supporter 33. This gear 52 is rotatable about an axis 52a which is orthogonal to the direction in which the first guide member 30 opposes the second guide member 31, and substantially halves of the gear 52 jut out from both sides of the roller supporter 33 in the thickness directions. The pinion gear 52 engages with the respective rack gears 51 of the first guide member 30 and the second guide member 31.

Also in this case, as the elevation frame 11 (see Fig. 1) moves up or down and the first guide member 30 and the second guide member 31 move relative to each other, the rollers 32a and 32b roll and move in the longitudinal direction of the guide members 30 and 31. In this regard, since the rack gears 51 of the guide members 30 and 31 engage with the pinion gear 52 of the roller supporter 33, the rollers 32a and 32b do not slip in the longitudinal direction of the guide members 30 and 31. In other words, the rack gears 51 and the pinion gear 52 prevent the rollers 32a and 32b and the roller supporter 33 from slipping while allowing the rollers 32a and 32b to roll.

Also in this case, since the rollers 32a and 32b are connected with one another by the roller supporter 33, it is possible to prevent all rollers 32a and 32b from slipping only by providing the pinion gear 52 to the roller supporter 33.

In addition to the above, the anti-slip means may have an arrangement different from the above-described protruding portions 41 and the concave portions 42 or the above-described rack gears 51 and the pinion gear 52, as long as the vertical slipping of the rollers 32a and 32b with respect to the guide members 30 and 31 is prevented while the rollers 32a and 32b are allowed to roll in vertical directions with respect to the guide members 30 and 31.

In addition to the above, while in the embodiment above the protruding portions 41 are formed on only one roller 32a1, the protruding portions 41 may be formed on two or more rollers 32a. Alternatively, the protruding portions 41 are formed on at least one of the rollers 32a and at least one of the rollers 32b, and correspondingly the concave portions 42 are formed on the surfaces of the both first V-shaped groove 30a and the second V-shaped groove 31a at which surfaces the grooves contact the rollers 32a and 32b.

In addition to the above, while in the embodiment above the rollers 32a and 32b are connected with one another by the roller supporter 33 so that the positional relations of the rollers 32a and 32b are maintained, the roller supporter 33 may not be provided. The slipping of the rollers 32a and 32b at the time of the relative movement of the first guide member 30 and the second guide member 31 can be prevented also in this case, by forming the protruding portions 41 on each of the rollers 32a and 32b, for example.

In addition to the above, while in the embodiment above the traverse unit 14 is periodically moved up and down while the yarns Y are wound onto the bobbin 20, the traverse unit 14 may be moved up and down not periodically but at random timings during the winding of the yarns Y, for example. Furthermore, the traverse unit 14 may not always be moved up to the same height. For example, the height to which the traverse unit 14 is moved up may be changed each time the creeping is carried out.

In addition to the above, while in the embodiment above the problem of saddle bag at ends in the packages is prevented by moving up and down the traverse unit 14, this arrangement is not prerequisite. For example, the problem of saddle bag at ends in the packages 21 may be prevented by another method, e.g. the traverse unit 14 is arranged so that its traversal width is changeable and the winding width of the yarn Y is reduced by temporarily shortening the traversal width. Furthermore, the yarn winding device may not perform the operation to prevent the problem of saddle bag at ends in the packages.

When the elevation frame 11 is not moved up and down while the yarns Y are wound onto the bobbins 20, as described above, the first guide member 30 and the second guide member 31 move relative to each other when the contact roller 15 and the supporting plate 22 are pushed up by the packages 21. The positional deviations of the rollers 32a and 32b and the roller supporter 33 also occur in this case if the protruding portions 41 and the concave portions 42 are not formed.

In this case, however, the relative movement of the first guide member 30 and the second guide member 31 only occurs when the contact roller 15 and the supporting plate 22 are pushed up by the packages 21 and when these components moves down to the original positions during a period which is after the formation of the packages 21 and before the formation of the next packages 21. In short, while a single package 21 is formed, the first guide member 30 and the second guide member 31 move relative to each other only twice. For this reason, the positions deviations of the rollers 32a and 32b and the roller supporter 33 while a single package 21 is formed are small, and hence the rollers 32a and 32b and the roller supporter 33 are not significantly deviated from the original positions while a single package is formed, even if the protruding portions 41 and the concave portions 42 are not formed.

In addition to the above, when the guide members 30 and 31 are provided with a stopper, it is possible to return the rollers 32a and 32b and the roller supporter 33 to their original positions by moving the first guide member 30 and the second guide member 31 relative to each other while keeping the roller supporter 33 to contact the stopper in such a way that, for example, each time a predetermined number of packages 21 are formed, each of the first guide member 30 and the second guide member 31 is caused to move round its range of movement. As such, this operation prevents the positional deviations of the rollers 32a and 32b and the roller supporter 33 even if a plurality of packages 21 are successively formed.

The operation above, however, is disadvantageous in that, since the roller supporter 33 collides the stopper, components such as the rollers 32a and 32b and the roller supporter 33 receive a severe impact, and this may shorten the life of the components such as the rollers 32a and 32b and the roller supporter 33.

In this regard, also in the case above, the slipping of the rollers 32a and 32b and the roller supporter 33 is prevented by the protruding portions 41 formed on the outer circumference of the roller 32a1 and the concave portions 42 formed on the first V-shaped groove 30a and the second V-shaped groove 31a in the same manner as the embodiment above, with the result that it is unnecessary to perform the operation to return the rollers 32a and 32b and the roller supporter 33 to the original positions, by which the components such as the roller supporter 33 receive a severe impact.

In addition to the above, while in the embodiment above the guide unit 25 is a so-called cross-roller-type guide unit in which rollers 32a and 32b whose axes are orthogonal to one another are alternately provided and V-shaped grooves 30a and 31a are formed on the guide members 30 and 31 to correspond to the rollers 32a and 32b, the guide unit may be differently arranged such that, for example, a plurality of rollers having parallel axes are provided between the first guide member 30 and the second guide member 31 to be aligned in the longitudinal direction of the guide members 30 and 31.

In addition to the above, the number of guide units 25 which vertically guide the contact roller 15 with respect to the elevation frame 11 may be suitably changed in accordance with the design conditions such as the length and weight of the contact roller 15 and the length of elevation.

## Claims

1. Use of a yarn winding device structured to form a plurality of packages by winding the yarns supplied from a spinning machine onto a plurality of bobbins (20), the yarn winding device comprising:
a bobbin holder (13) which is supported by a main body frame (10) and to which bobbins (20) are attached;
a supporting frame (11) which is supported by the main body frame to be movable in directions approaching and away from the bobbin holder;
a contact roller (15) which is arranged to be in parallel to the bobbin holder (13) and rotates while contacting either the outer circumferences of the bobbins or the outer circumferences of packages formed by winding yarns onto the bobbins;
a roller supporter (22) which is provided on the supporting frame (11) to be movable in the directions approaching and away from the bobbin holder and rotatably supports the contact roller (15); and
a guide unit (25) which guides the supporting frame (11) and the roller supporter (22) in the directions approaching and away from the bobbin holder,
the guide unit (25) including:
a first guide member (30) fixed to the supporting frame;
a second guide member (31) fixed to the roller supporter to oppose the first guide member;
rollers (32a, 32b) provided between the first guide member and the second guide member; **characterized by**
an anti-slip means (41, 42) which allows the rollers to roll in the directions approaching and away from the bobbin holder (13) with respect to the first guide member (30) and the second guide member (31) and prevents the rollers (32a, 32b) from slipping in the directions approaching and away from the bobbin holder (13) with respect to the first guide member and the second guide member,
wherein the supporting frame (11) is repeatedly moved up and down while a single package is formed.

2. The use of the yarn winding device according to claim 1, further comprising:
a roller supporting component which maintains positional relations of the rollers by connecting the rollers with one another.

3. The use of the yarn winding device according to claim 2, wherein,
the anti-slip means includes:
concave portions (42) which are formed, along the directions approaching and away from the bobbin holder, on surfaces of the first guide member (30) and the second guide member (31) at which surfaces the first and second guide members contact the rollers; and
protruding portions (41) which correspond to the respective concave portions (42), are formed on the outer circumference of at least one of the rollers (32a, 32b) along the circumferential direction, and are able to fit in the corresponding concave portions.

4. The use of the yarn winding device according to claim 2, wherein,
the anti-slip means includes:
rack gears (51) provided in the first guide member and the second guide member, respectively; and
a pinion gear (52) which is provided in the roller supporting component and engages with the rack gears.

5. The use of the yarn winding device according to any one of claims 1 to 4, wherein,
the supporting frame is provided with a traverse unit (14) which traverses the yarns in the axial directions of the bobbins, and
the distance between the traverse unit (14) and the bobbin holder (13) is changeable by moving the supporting frame having the traverse unit in one of the directions approaching and away from the bobbin holder (13).

6. The use of the yarn winding device according to any one of claims 1 to 5, wherein,
the first guide member (30) has a first V-shaped groove which is substantially V-shaped in cross section and extends in the directions approaching and away from the bobbin holder,
the second guide member (31) has a second V-shaped groove which is substantially V-shaped in cross section and extends in the directions approaching and away from the bobbin holder, and
the rollers (32a, 32b) are arranged so that each of the rollers contacts both of the first V-shaped groove and the second V-shaped groove at positions on the outer circumference which positions are symmetrical about the rotation axis of the rollers and axes of neighboring ones of the rollers are orthogonal to each other.

7. The use of the yarn winding device according to any of the preceding claims, wherein the up and down movement of the supporting frame (11) is repeated for about several tens to several hundreds of times, while a single package is formed.

## Patentansprüche

1. Verwendung einer Garnaufwickelvorrichtung, die strukturiert ist, um eine Vielzahl von Paketen durch Aufwickeln der Garne, die von einer Spinnmaschine bereitgestellt werden, auf eine Vielzahl von Spulen (20) zu bilden, wobei die Garnaufwickelvorrichtung umfasst:
einen Spulenhalter (13), welcher von einem Hauptkörperrahmen (10) gestützt wird und an welchem Spulen (20) angebracht sind;
einen Stützrahmen (11), welcher durch den Hauptkörperrahmen gestützt wird, um in Richtung auf den Spulenhalter zu und von diesem weg beweglich zu sein;
eine Kontaktwalze (15), welche angeordnet ist, um parallel zu dem Spulenhalter (13) zu sein, und sich dreht, während sie entweder den äußeren Umfang der Spulen oder den äußeren Umfang von Paketen, die durch Aufwickeln der Garne auf die Spulen gebildet wurden, berührt;
eine Walzenstütze (22), welche auf dem Stützrahmen (11) angeordnet ist, um in die Richtung auf den Spulenhalter zu und von diesem weg beweglich zu sein, und die Kontaktwalze (15) drehbar stützt; und
eine Führungseinheit (25), welche den Stützrahmen (11) und die Walzenstütze (22) in die Richtung auf den Spulenhalter zu und von diesem weg führt,
wobei die Führungseinheit (25) beinhaltet:
ein erstes Führungselement (30), das an dem Stützrahmen befestigt ist;
ein zweites Führungselement (31), das an der Walzenstütze befestigt ist, um dem ersten Führungselement gegenüber zu stehen;
Walzen (32a, 32b), die zwischen dem ersten Führungselement und dem zweiten Führungselement angeordnet sind; **gekennzeichnet durch**
ein Anti-Rutsch Mittel (41, 42), welches es den Walzen erlaubt, in die Richtung auf den Spulenhalter (13) zu und von diesem weg bezüglich des ersten Führungselements (30) und des zweiten Führungselements (31) zu rollen und welches die Rollen (32a, 32b) daran hindert, in Richtung auf den Spulenhalter (13) zu und von diesem weg bezüglich des ersten Führungselements und des zweiten Führungselements zu gleiten,
wobei der Stützrahmen (11) wiederholt aufwärts und abwärts bewegt wird, während ein einzelnes Paket gebildet wird.

2. Die Verwendung der Garnaufwickelvorrichtung nach Anspruch 1, ferner umfassend:
eine Walzenstützkomponente, welche die Lagebeziehungen zwischen den Walzen aufrechterhält, indem sie die Walzen miteinander verbindet.

3. Die Verwendung der Garnaufwickelvorrichtung nach Anspruch 2, wobei
das Anti-Rutsch Mittel beinhaltet:
konkave Abschnitte (42), welche entlang der Richtung auf den Spulenhalter zu und von diesem weg auf Oberflächen des ersten Führungselements (30) und des zweiten Führungselements (31) ausgebildet sind, auf welchen Oberflächen das erste und das zweite Führungselement die Walzen kontaktieren; und
hervorstehende Abschnitte (41), welche den jeweiligen konkaven Abschnitten (42) entsprechen, auf dem äußeren Umfang von wenigsten einer der Walzen (32a, 32b) entlang der Umfangsrichtung ausgebildet sind und geeignet sind, in die entsprechenden konkaven Abschnitte zu passen.

4. Die Verwendung der Garnaufwickelvorrichtung nach Anspruch 2, wobei
das Anti-Rutsch Mittel beinhaltet:
Zahnstangen (51), die jeweils in dem ersten Führungselement und dem zweiten Führungselement angeordnet sind; und
ein Ritzel (52), welches in der Walzenstützkomponente angeordnet ist und in die Zahnstangen eingreift.

5. Die Verwendung der Garnaufwickelvorrichtung nach einem der Ansprüche 1 bis 4, wobei
der Stützrahmen mit einer Traverseneinheit (14) ausgestattet ist, welche die Garne in den axialen Richtungen der Spulen quert, und
der Abstand zwischen der Traverseneinheit (14) und dem Spulenhalter (13) durch das Bewegen des Stützrahmens, der die Traverseneinheit umfasst, in eine der Richtungen auf den Spulenhalter (13) zu und von diesem weg veränderbar ist.

6. Die Verwendung der Garnaufwickelvorrichtung nach einem der Ansprüche 1 bis 5, wobei
das erste Führungselement (30) eine erste V-förmige Nut hat, welche im Wesentlichen V-förmig im Querschnitt ist und sich in die Richtung auf den Spulenhalter zu und von diesem weg erstreckt,
das zweite Führungselement (31) eine zweite V-förmige Nut hat, welche im Wesentlichen V-förmig im Querschnitt ist und sich in die Richtung auf den Spulenhalter zu und von dem Spulenhalter weg erstreckt, und
die Walzen (32a, 32b) so angeordnet sind, dass jede von den Walzen beide, die erste V-förmige Nut und die zweite V-förmige Nut, an Stellen auf dem äußeren Umfang berührt, wobei die Stellen symmetrisch zu der Drehachse der Walzen sind und Achsen von benachbarten Walzen senkrecht zueinander sind.

7. Die Verwendung der Garnaufwickelvorrichtung nach einem der vorherigen Ansprüche, wobei die Auf- und Abwärtsbewegung des Stützrahmens (11) für etwa mehrere zehn bis mehrere hunderte Male wiederholt wird, während ein einzelnes Paket gebildet wird.

## Revendications

1. Utilisation d'un dispositif d'enroulement de fil structuré pour former une pluralité d'emballages en enroulant les fils fournis à partir d'une machine à filer sur une pluralité de bobines (20), le dispositif d'enroulement de fil comprenant :
un porte-bobine (13) qui est supporté par un châssis de corps principal (10) et auquel les bobines (20) sont fixées ;
un châssis de support (11) qui est supporté par le châssis de corps principal pour être mobile dans des directions s'approchant et s'éloignant du porte-bobine ;
un rouleau de contact (15) qui est agencé pour être en parallèle au porte-bobine (13) et tourne tout en entrant en contact soit avec les circonférences extérieures des bobines ou avec les circonférences extérieures des emballages formés par enroulement de fils sur les bobines ;
un support de rouleau (22) qui est prévu sur le châssis de support (11) pour être mobile dans les directions s'approchant et s'éloignant du porte-bobine et supporte en rotation le rouleau de contact (15) ; et
une unité de guidage (25) qui guide le châssis de support (11) et le support de rouleau (22) dans les directions s'approchant et s'éloignant du porte-bobine,
l'unité de guidage (25) comportant :
un premier élément de guidage (30) fixé au châssis de support ;
un deuxième élément de guidage (31) fixé au support de rouleau de manière à être opposé au premier élément de guidage ;
des rouleaux (32a, 32b) prévus entre le premier élément de guidage et le deuxième élément de guidage ; **caractérisée par**
un moyen anti-glissement (41, 42) qui permet aux rouleaux de rouler dans les directions s'approchant et s'éloignant du porte-bobine (13) par rapport au premier élément de guidage (30) et au deuxième élément de guidage (31) et empêche les rouleaux (32a, 32b) de glisser dans les directions s'approchant et s'éloignant du porte-bobine (13) par rapport au premier élément de guidage et au deuxième élément de guidage,
dans laquelle le châssis de support (11) se déplace à maintes reprises vers le haut et vers le bas tandis qu'un seul emballage est formé.

2. Utilisation du dispositif d'enroulement de fil selon la revendication 1, comprenant en outre :
un composant de support de rouleau qui maintient des relations de position des rouleaux en reliant les rouleaux les uns aux autres.

3. Utilisation du dispositif d'enroulement de fil selon la revendication 2, dans laquelle,
le moyen anti-glissement comporte :
des parties concaves (42) qui sont formées, le long des directions s'approchant et s'éloignant du porte-bobine, sur des surfaces du premier élément de guidage (30) et du deuxième élément de guidage (31) au niveau desquelles les premier et deuxième éléments de guidage entrent en contact avec les rouleaux ; et
des parties en saillie (41) qui correspondent aux parties concaves respectives (42), sont formées sur la circonférence extérieure d'au moins l'un des rouleaux (32a, 32b) le long de la direction circonférentielle, et sont capables de s'ajuster dans les parties concaves correspondantes.

4. Utilisation du dispositif d'enroulement de fil selon la revendication 2, dans laquelle,
le moyen anti-glissement comporte :
des engrenages à crémaillère (51) prévus dans le premier élément de guidage et le deuxième élément de guidage, respectivement ; et
un pignon (52) qui est prévu dans le composant de support de rouleau et en prise avec les engrenages à crémaillère.

5. Utilisation du dispositif d'enroulement de fil selon l'une quelconque des revendications 1 à 4, dans laquelle,
le châssis de support est muni d'une unité transversale (14) qui traverse les fils dans les directions axiales des bobines, et
la distance entre l'unité transversale (14) et le porte-bobine (13) peut être modifiée par le déplacement du châssis de support ayant l'unité transversale dans l'une des directions s'approchant et s'éloignant du porte-bobine (13).

6. Utilisation du dispositif d'enroulement de fil selon l'une quelconque des revendications 1 à 5, dans laquelle,
le premier élément de guidage (30) a une première rainure en forme de V qui est essentiellement en forme de V en coupe transversale et s'étend dans les directions s'approchant et s'éloignant du porte-bobine,
le deuxième élément de guidage (31) a une deuxième rainure en forme de V qui est essentiellement en forme de V en coupe transversale et s'étend dans les directions s'approchant et s'éloignant du porte-bobine, et
les rouleaux (32a, 32b) sont agencés de sorte que chacun des rouleaux entre en contact, à la fois, avec la première rainure en forme de V et la deuxième rainure en forme de V à des positions sur la circonférence extérieure lesquelles positions sont symétriques par rapport à l'axe de rotation des rouleaux et les axes des rouleaux voisins des rouleaux sont orthogonaux les uns aux autres.

7. Utilisation du dispositif d'enroulement de fil selon l'une des revendications précédentes, dans laquelle le mouvement vers le haut et vers le bas du châssis de support (11) est répété pendant environ plusieurs dizaines à plusieurs centaines de fois, tandis qu'un seul emballage est formé.
